# FASCICULE DE BREVET EUROPEEN

(11) **EP 2 765 079 B1**
(45) Date de publication et mention de la délivrance du brevet: **13.01.2016**
(21) Numéro de dépôt: 14153563.3
(22) Date de dépôt: 31.01.2014
(51) Int. Cl.: B64D 25/04, B64D 11/06, B60N 2/06

(54) **Siège de cabine pour aéronef**
Kabinensitz für Flugzeug
Cabin seat for aircraft

(30) Priorité: 07.02.2013 FR 1351068
(43) Date de publication de la demande: 13.08.2014
(73) Titulaire: Zodiac Actuation Systems, 89000 Auxerre (FR)
(72) Inventeur: Pons, Sylvain, 75020 PARIS (FR)
(74) Mandataire: Blot, Philippe Robert Emile

(56) Documents cités:
- EP-A2- 1 849 647
- WO-A1-2012/095534
- US-A1- 2006 284 466
- US-A1- 2012 160 056
- US-B1- 7 748 778

## Description

La présente invention concerne un siège de cabine pour aéronef, du type comprenant un bâti et au moins une roue coopérant avec le plancher de la cabine pour le déplacement du siège, la roue étant montée mobile en rotation autour de son axe relativement au bâti, et un actionneur pour entraîner la roue en rotation autour de son axe, l'actionneur comprenant :
- un arbre de sortie, solidaire en rotation autour de son axe avec la ou chaque roue,
- un arbre amont,
- un moteur, pour entraîner l'arbre amont en rotation autour de son axe relativement au bâti,
- un frein, pour bloquer la rotation de l'arbre amont autour de son axe relativement au bâti, et
- une chaîne de démultiplication, liant mécaniquement les arbres amont et de sortie de sorte qu'ils tournent conjointement relativement au bâti autour de leurs axes respectifs,
la chaîne de démultiplication comprenant un dernier étage de démultiplication comportant un élément d'engrenage coaxial avec l'arbre de sortie et solidaire en rotation autour de son axe avec l'arbre de sortie.

Les sièges de passagers disposés dans les avions sont couramment équipés d'actionneurs électriques permettant le déplacement de différents éléments mobiles du siège les uns par rapport aux autres, comme dans le document EP 1849647.

Pour assurer la sécurité des passagers lors des phases critiques de décollage ou d'atterrissage, il est impératif que le siège puisse présenter une rigidité suffisante, évitant qu'en cas de choc violent, le siège ne se déforme ou se décroche du reste de l'appareil. Or la seule inertie des actionneurs reliant les différents éléments du siège n'est pas toujours suffisante pour satisfaire ces contraintes de résistance en cas de choc. En outre, il existe des risques importants de rupture des chaînes de démultiplication des actionneurs.

Pour contourner ces problèmes, il est connu d'immobiliser certaines parties du siège les unes par rapport aux autres à l'aide de verrous lors des phases critiques du vol de l'appareil. Ces verrous sont constitués par exemple par le noyau mobile d'un électroaimant dont le bobinage est porté par une partie mobile du siège et dont le noyau mobile est déplaçable entre une position rétractée et une position sortie pour laquelle il est engagé dans la partie fixe du siège, assurant ainsi un blocage mécanique positif du mouvement des deux parties de siège l'une par rapport à l'autre.

Cependant, le recours à ces verrous alourdit le siège et en complique le pilotage. En outre, il arrive que, compte tenu des tolérances de fabrication du siège et des actionneurs, et des éventuelles actions involontaires du passager sur le siège, certains verrous ne soient pas alignés avec leurs gâches respectives, ce qui empêche le déplacement desdits verrous vers leurs positions de sortie.

Un objectif de l'invention est de permettre un verrouillage fiable des éléments du siège. D'autres objectifs sont d'alléger le siège, et d'en simplifier le verrouillage.

A cet effet, l'invention a pour objet un siège de cabine du type précité, dans lequel ledit dernier étage de démultiplication comprend en outre un premier élément denté, et une pluralité de satellites engrenés sur ledit premier élément denté et coopérant avec l'élément d'engrenage.

Selon des modes de réalisation préférés de l'invention, le siège de cabine présente l'une ou plusieurs des caractéristiques suivantes, prise(s) isolément ou suivant toute(s) combinaison(s) techniquement possible(s) :
- chaque satellite est monté mobile en rotation autour de son axe sur le bâti, l'élément d'engrenage solidaire en rotation avec l'arbre de sortie étant constitué par un deuxième élément denté sur lequel est engrené chaque satellite,
- les satellites comprennent un unique satellite moteur, adapté pour transmettre un couple du premier élément denté au deuxième élément denté, le ou chaque autre satellite étant un satellite fou,
- le ou chaque satellite fou a un déport de denture négatif relativement au déport de denture du satellite moteur,
- l'entraxe entre le ou chaque satellite fou et le premier élément denté est supérieur à l'entraxe entre le satellite moteur et le premier élément denté,
- le dernier étage de démultiplication est un train épicycloïdal,
- l'élément d'engrenage solidaire en rotation avec l'arbre de sortie est un porte satellite, les satellites étant montés mobiles en rotation autour de leurs axes respectifs sur le porte satellite,
- la chaîne de démultiplication comprend un avant-dernier étage de démultiplication, comprenant un élément d'engrenage amont coaxial avec le premier élément denté et solidaire en rotation autour de son axe avec le premier élément denté, un élément denté amont, et une pluralité de satellites amont engrenés sur ledit élément denté amont,
- l'avant-dernier étage de démultiplication est un train épicycloïdal,
- la chaîne de démultiplication comprend une couronne commune aux dernier et avant-dernier étages de démultiplication,
- l'élément d'engrenage amont est un porte satellite, les satellites amont étant montés mobiles en rotation autour de leurs axes respectifs sur ledit porte satellite, et
- le premier élément denté est un pignon.

D'autres caractéristiques et avantages de l'invention apparaîtront à la lecture de la description qui va suivre, donnée uniquement à titre d'exemple et faite en se référant aux dessins annexés, sur lesquels :
- la Figure 1 est une vue schématique en perspective d'un siège de cabine selon l'invention,
- la Figure 2 est une vue en coupe d'une partie d'un actionneur du siège de passager de la Figure 1, l'actionneur étant dans une configuration verrouillée,
- la Figure 3 est une vue en perspective de l'actionneur de la Figure 2 en configuration verrouillée, certains éléments ayant été omis pour des raisons de clarté,
- la Figure 4 est une vue identique à celle de la Figure 3, l'actionneur étant en configuration déverrouillée,
- la Figure 5 est une vue identique à celle de la Figure 1, l'actionneur étant en configuration déverrouillée,
- la Figure 6 est une vue identique à celle de la Figure 1, l'actionneur étant en configuration désaccouplée,
- la Figure 7 est une vue en perspective d'une chaîne de démultiplication de l'actionneur de la Figure 2, selon un premier mode de réalisation, et
- la Figure 8 est une vue en perspective de la chaîne de démultiplication de l'actionneur de la Figure 2, selon un deuxième mode de réalisation.

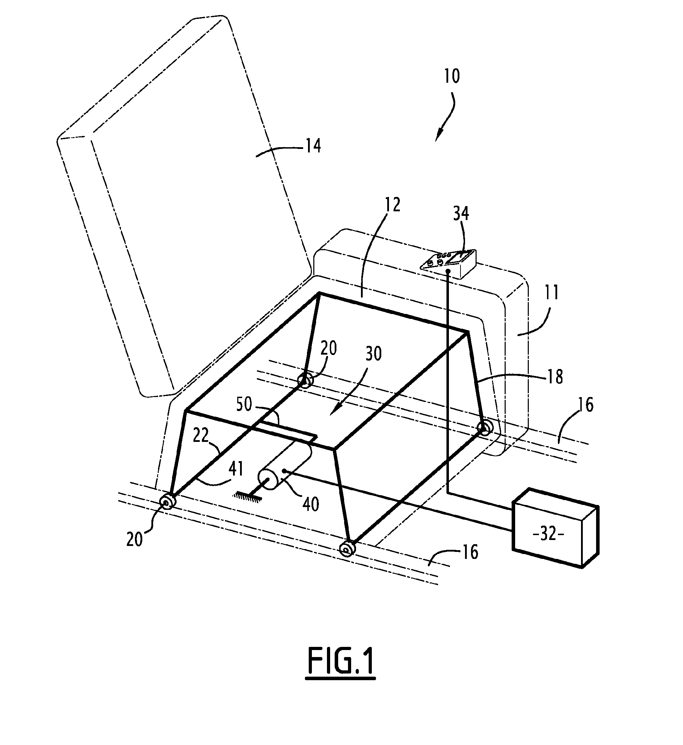

Le siège 10 représenté sur la figure 1 comporte un bâti 11, ainsi qu'une assise 12 et un dossier 14 montés mobiles par rapport au bâti 11. Il comporte également deux crémaillères 16 fixées au plancher de la cabine et le long duquel le bâti 11 est monté coulissant par l'intermédiaire d'un piètement 18.

En particulier, le piètement 18 comprend deux roues 20 engrenées chacune sur l'une des crémaillères 16. Lesdites roues 20 sont adaptées pour se déplacer par rapport aux crémaillères 16 conjointement avec le bâti 11. Elles forment avec les crémaillères 16 des moyens de déplacement du siège 10 relativement au plancher de la cabine.

Les roues 20 sont montées aux extrémités axiales d'un arbre de transmission 22, de façon à encadrer ledit arbre 22. Elles sont solidaires de l'arbre de transmission 22.

L'arbre de transmission 22 est monté mobile en rotation autour de son axe relativement au bâti 11.

Un actionneur 30 est raccordé au piètement 18 pour assurer le déplacement du piètement 18 suivant la longueur des crémaillères 16. L'actionneur 30 est relié à une unité centrale de pilotage 32, elle-même reliée à un clavier 34 permettant au passager assis sur le siège 10 de déplacer celui-ci par commande de l'actionneur 30.

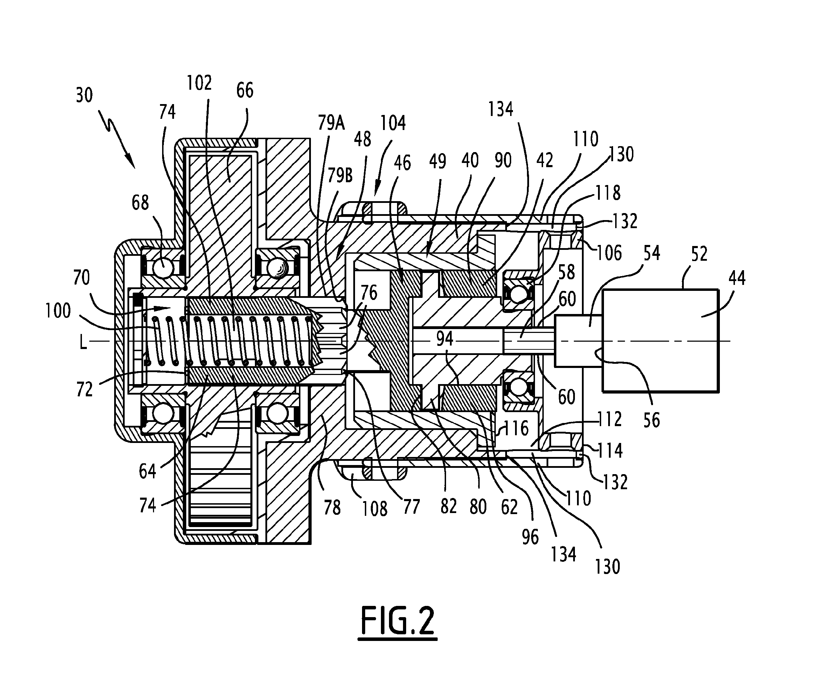

En particulier, l'actionneur 30 est adapté pour entraîner les roues 20 en rotation autour de leurs axes. A cet effet, l'actionneur 30 comprend un capot 40, solidaire du bâti 11, un arbre de sortie 41, un arbre d'entrée 42 (Figure 2), monté mobile autour de son axe relativement au capot 40, un moteur 44 (Figure 2), pour entraîner l'arbre d'entrée 42 en rotation autour de son axe relativement au capot 40, un arbre intermédiaire 46 (Figure 2), monté mobile en rotation autour de son axe relativement au capot 40, un frein 48 (Figure 2), pour bloquer la rotation de l'arbre intermédiaire 46 autour de son axe relativement au capot 40, un organe 49 d'accouplement de l'arbre intermédiaire 46 à l'arbre d'entrée 42, et une chaîne de démultiplication 50, liant mécaniquement les arbres intermédiaire 46 et de sortie 41 de sorte qu'ils tournent conjointement relativement au capot 40 autour de leurs axes respectifs.

L'arbre de sortie 41 est constitué par l'arbre de transmission 22.

En référence à la Figure 2, le moteur 44 est un moteur électrique. Il comporte, de façon connue, un rotor (non représenté) et un stator (non représenté) logés dans un boîtier 52, ainsi qu'un arbre de sortie 54 solidaire du rotor par une extrémité proximale 56. L'extrémité distale 58 opposée présente deux méplats 60 opposés.

Le boîtier 52 est solidaire du capot 40.

L'arbre d'entrée 42 est couplé à l'arbre de sortie 54 de sorte que ces deux arbres 42, 54 tournent conjointement autour de leurs axes respectifs. Dans l'exemple représenté, l'arbre d'entrée 42 est un crabot, et il est emboîté sur l'arbre de sortie 54. En variante (non représentée), un réducteur mécanique est interposé entre le moteur 44 et l'arbre d'entrée 42, en assurant le couplage mécanique de l'arbre de sortie 54 à l'arbre d'entrée 42.

L'arbre intermédiaire 46 s'étend selon une direction longitudinale L. Il est en particulier coaxial à l'arbre d'entrée 42.

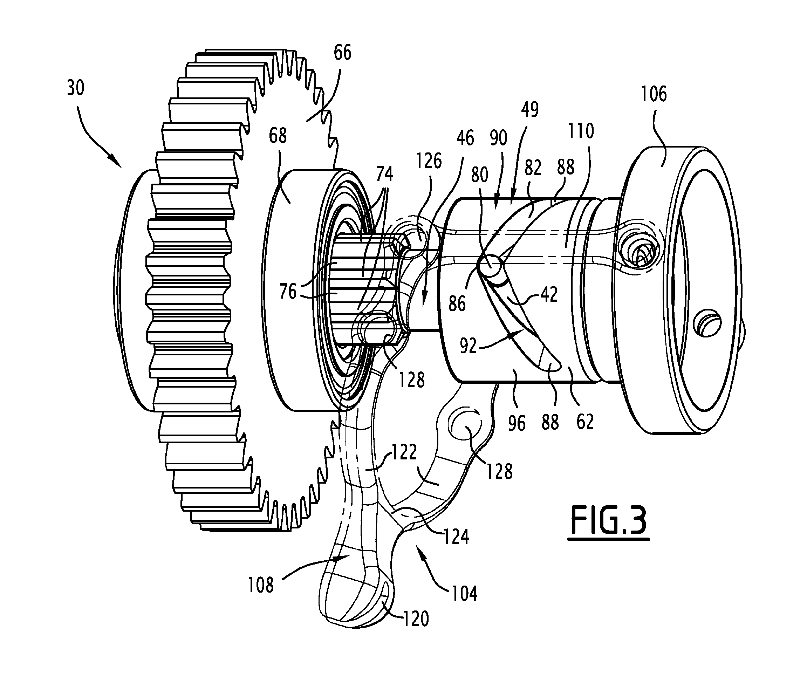

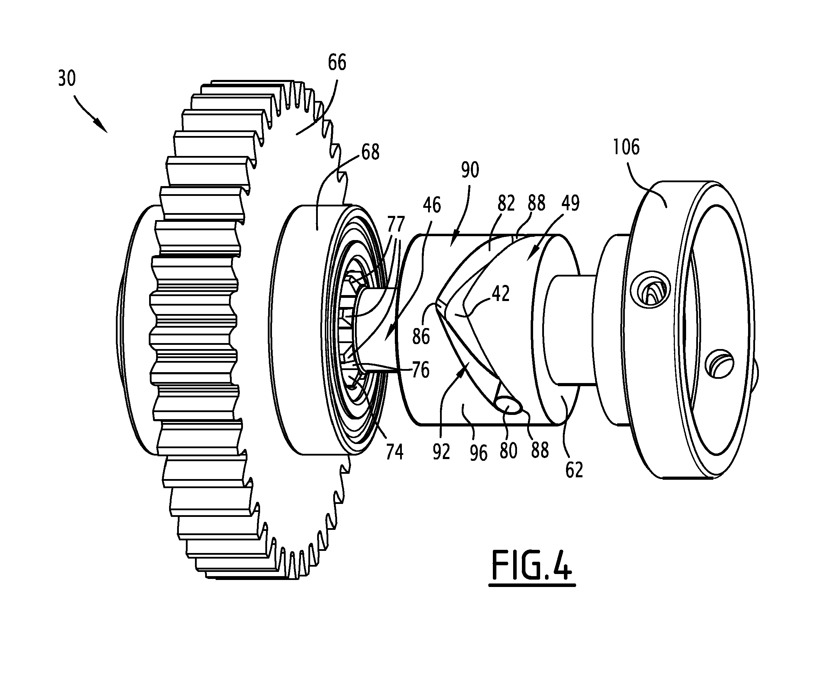

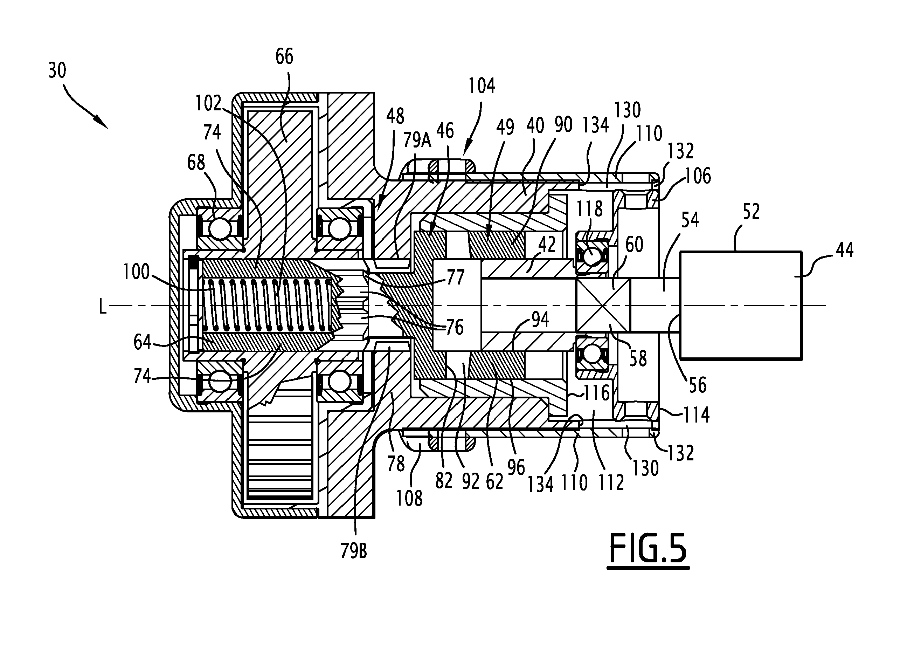

L'arbre intermédiaire 46 est monté mobile en translation suivant la direction longitudinale L relativement au capot 40 entre une position verrouillée (Figures 2 et 3), dans laquelle il coopère avec le frein 48 pour être bloqué en rotation autour de son axe relativement au capot 40, et une position déverrouillée (Figures 4 et 5), dans laquelle il est à l'écart du frein 48 et est mobile en rotation autour de son axe relativement au capot 40.

Suivant la direction longitudinale L, l'arbre intermédiaire 46 présente une extrémité proximale 62 d'accouplement à l'arbre d'entrée 42, et une extrémité distale 64 d'accouplement à un pignon d'entrée 66 de la chaîne de démultiplication 50.

Le pignon 66 est coaxial avec l'arbre intermédiaire 46. Il est monté mobile en rotation autour de son axe sur le capot 40 par l'intermédiaire d'un roulement à billes 68.

Le pignon 66 présente en son centre une cavité 70 de réception de l'arbre intermédiaire 46. Cette cavité 70 est traversante et orientée longitudinalement. Elle présente à sa périphérie une pluralité de cannelures longitudinales 72 ménagées dans le pignon 66. Chaque cannelure 72 s'étend d'une extrémité longitudinale de la cavité 70 à l'extrémité longitudinale opposée.

L'extrémité distale 64 de l'arbre 46 porte une pluralité de nervures 74 solidaires de l'arbre 46. Chaque nervure 74 fait saillie radialement vers l'extérieur depuis une surface extérieure 76 de l'arbre 46. Chaque nervure 74 est orientée longitudinalement et coopère avec une cannelure 72 de façon à assurer le couplage de l'arbre 46 avec le pignon 66.

Chaque nervure 74 présente à son extrémité orientée vers l'extrémité proximale 62 un chanfrein 77.

Le frein 48 est constitué par une nervure annulaire 78 solidaire du capot 40, faisant saillie depuis le capot 40 vers l'intérieur du capot 40.

Cette nervure annulaire 78 est orientée perpendiculairement à la direction longitudinale L. Elle est en particulier accolée au pignon 66. Elle définit un orifice 79A de passage de l'arbre 46, coaxial avec l'arbre 46 et de diamètre sensiblement égal au diamètre extérieur de l'arbre 46.

Une pluralité de cannelures longitudinales 79B sont ménagées dans la nervure annulaire 78, à la périphérie de l'orifice 79A, chaque cannelure 79B s'étendant d'une extrémité longitudinale de l'orifice 79A à l'extrémité longitudinale opposée. Chaque cannelure 79B est adaptée pour coopérer avec une nervure de l'arbre 46 lorsqu'il est en position verrouillée, de façon à empêcher toute rotation de l'arbre 46 autour de son axe relativement au capot 40.

L'organe d'accouplement 49 est adapté pour :
- convertir une rotation de l'arbre d'entrée 42 autour de son axe en une translation de l'arbre intermédiaire 46 suivant la direction longitudinale L, vers la position déverrouillée, lorsque l'arbre intermédiaire 46 est en position verrouillée, et pour
- convertir une rotation de l'arbre d'entrée 42 autour de son axe en une rotation de l'arbre intermédiaire 46 autour de son axe, lorsque l'arbre intermédiaire 46 est en position déverrouillée.

A cet effet, l'organe d'accouplement 49 comprend un pion 80, solidaire de l'arbre d'entrée 42, et une surface de came 82, inclinée relativement à la direction longitudinale L et définie par l'extrémité proximale 62 de l'arbre 46.

Le pion 80 et la surface de came 82 coopèrent l'une avec l'autre. En particulier, le pion 80 est maintenue en appui contre la surface de came 82.

Le pion 80 est orientée radialement. Dans l'exemple représenté, elle fait saillie radialement vers l'extérieur depuis une surface extérieure 84 de l'arbre d'entrée 42.

En référence à la Figure 3, la surface de came 82 présente des butées 86, 88 de déplacement du pion 80 le long de la surface de came 82. Une première 86 desdites butées 86, 88 constitue une butée de rétractation, disposée de sorte que, lorsque le pion 80 est en appui contre cette butée 86, la longueur longitudinale de l'ensemble constitué par les arbres intermédiaire 46 et d'entrée 42 soit minimale. Au moins une (dans l'exemple représenté, deux) deuxième butée 88 constitue une butée de déploiement, disposée de sorte que, lorsque le pion 80 est en appui contre cette butée 88 la longueur longitudinale de l'ensemble constitué par les arbres intermédiaire 46 et d'entrée 42 soit maximale.

L'axe défini par la butée de rétractation 86 avec la ou chaque butée de déploiement 88 est incliné relativement à la direction longitudinale L.

Dans l'exemple représenté, l'extrémité proximale 62 de l'arbre 46 comprend une couronne 90 s'étendant autour de l'arbre d'entrée 42. De préférence, cette couronne 90 présente un diamètre intérieur sensiblement égal au diamètre extérieur de l'arbre d'entrée 42, de façon à assurer un bon alignement des axes des arbres 42 et 46.

Une fente traversante 92 en forme de V est ménagée dans cette couronne 90, et débouche dans les faces intérieure 94 et extérieure 96 de la couronne 90. La pointe du V est orientée vers l'extrémité distale 64 de l'arbre 46, et les branches du V sont orientées à l'opposée de ladite extrémité distale 64.

Le bord de la fente 92 le plus proche de l'extrémité distale 64 constitue la surface de came 82. La butée de rétractation 86 est localisée à la pointe du V, et chaque butée de déploiement 88 est localisée à l'extrémité d'une branche du V.

De retour à la Figure 2, l'actionneur 30 comprend également un ressort 100 de rappel de l'arbre 46 en position verrouillée. Dans l'exemple représenté, ce ressort 100 est un ressort de compression, et il est interposé entre le capot 40 et l'arbre 46, au niveau de l'extrémité distale 64 de l'arbre 46. En particulier, l'arbre intermédiaire 46 délimite une cavité intérieure longitudinale 102, débouchant dans l'extrémité distale 64, de réception du ressort 100. L'actionneur 30 gagne ainsi en compacité.

L'actionneur 30 comprend également des moyens 104 de translation de l'arbre d'entrée 42 suivant son axe relativement au capot 40, de façon à pouvoir facilement désaccoupler l'arbre d'entrée 42 de l'arbre de sortie 54. Ces moyens de translation 104 comprennent une bague 106 de liaison de l'arbre d'entrée au capot 40, montée mobile en translation suivant la direction longitudinale L relativement au capot 40, une fourche 108, articulée au capot 40 suivant un axe perpendiculaire à la direction longitudinale L, et deux biellettes 110 de liaison de la fourche 108 à la bague 106.

La bague 106 est montée dans une piste 112, ménagée dans le capot 40, de guidage de la bague 106 en translation relativement au capot 40. Cette piste 112 s'étend d'une extrémité ouverte 114 du capot 40 jusqu'à une butée longitudinale 116.

L'arbre d'entrée 42 est solidaire en translation de la bague 106. Il est monté mobile en rotation autour de son axe sur la bague 106 par l'intermédiaire d'un roulement à billes 118.

De retour à la Figure 3, la fourche 108 comprend un manche 120 et deux branches 122 liés les uns aux autres par un point de jonction 124. Chaque branche 122 présente une extrémité libre 126 opposée au point de jonction 124 et, entre le point de jonction 124 et l'extrémité libre 126, un point 128 d'articulation au capot 40.

Chaque bielle 110 est articulée à l'extrémité libre 126 d'une branche 122 et à la bague 106. Une goupille (non représentée) assure la solidarisation longitudinale de chaque bielle 110 avec la bague 106. Cette goupille s'étend au travers d'une fenêtre longitudinale130 ménagée dans le capot 40.

La fenêtre 130 s'étend longitudinalement entre une extrémité proximale 132, proche du moteur 44, et une extrémité distale 134, éloignée du moteur 44.

La bague 106 est ainsi déplaçable le long de la piste 112 entre une position de crabotage, dans laquelle les goupilles de liaison de la bague 106 aux bielles 110 sont chacune en butée contre l'extrémité proximale 132 de la fenêtre 130 qu'elles traversent, et une position de décrabotage, dans laquelle la bague 106 est en butée contre la butée 116.

L'arbre d'entrée 42 et l'arbre intermédiaire 46 sont dimensionnés de sorte que, lorsque le pion 80 est en butée contre la butée de rétractation 86 et la bague 106 en position de crabotage, chaque nervure 74 de l'arbre intermédiaire 46 coopère avec les cannelures 79B du frein 48 et avec les cannelures 72 du pignon 66.

Un procédé de déverrouillage/reverrouillage automatique de l'actionneur 30 va maintenant être décrit, en référence aux Figures 1 à 5.

Initialement, l'actionneur 30 est en configuration verrouillée : l'arbre intermédiaire 46 est en position verrouillée, et les nervures 74 de l'arbre 46 coopèrent avec les cannelures 79B du frein 48 pour bloquer toute rotation de l'arbre 46 autour de l'axe longitudinal L relativement au capot 40. Le pion 80 repose en appui contre la butée de rétractation 86. La bague 106 est en position de crabotage.

Dans un premier temps, le moteur 44 est activé. Le rotor entre alors en rotation relativement au stator, et entraîne l'arbre de sortie 54 en rotation autour de l'axe longitudinal L. L'arbre d'entrée 42 étant solidaire en rotation de l'arbre de sortie 54, il est également entraîné en rotation autour de l'axe longitudinal L.

L'arbre intermédiaire 46 ne pouvant pas tourner autour de l'axe longitudinal L, le pion 80 tourne autour de l'axe longitudinal relativement à l'arbre intermédiaire 46. Ce faisant, le pion 80 appuie contre la surface de came 82, poussant l'arbre intermédiaire 46 à l'écart du moteur 44. L'arbre intermédiaire 46 se désengage alors progressivement du frein 48.

Lorsque le pion 80 arrive en butée contre la butée de déploiement 88, L'arbre intermédiaire 46 est intégralement désengagé du frein 48. Le couple transmis à l'arbre intermédiaire 46 via le pion 80 entraîne alors la rotation de l'arbre intermédiaire 46 autour de l'axe longitudinal L, et du pignon 66. Ce couple est transmis par l'intermédiaire de la chaîne de démultiplication 50 jusqu'à l'arbre de transmission 22, lequel entraîne la rotation des roues 20 et le déplacement du piètement 18.

Lorsque la position du piètement 18 désirée est atteinte, le moteur 44 est arrêté. L'arbre d'entrée 42 n'exerçant plus de couple sur l'arbre intermédiaire 46, la force de rappel exercée par le ressort 100 sur l'arbre intermédiaire 46 ne rencontre plus de résistance. L'arbre intermédiaire 46 revient alors en position de verrouillage, et le pion 80 glisse sur la surface de came 82 jusqu'à revenir en appui contre la butée de rétractation 86.

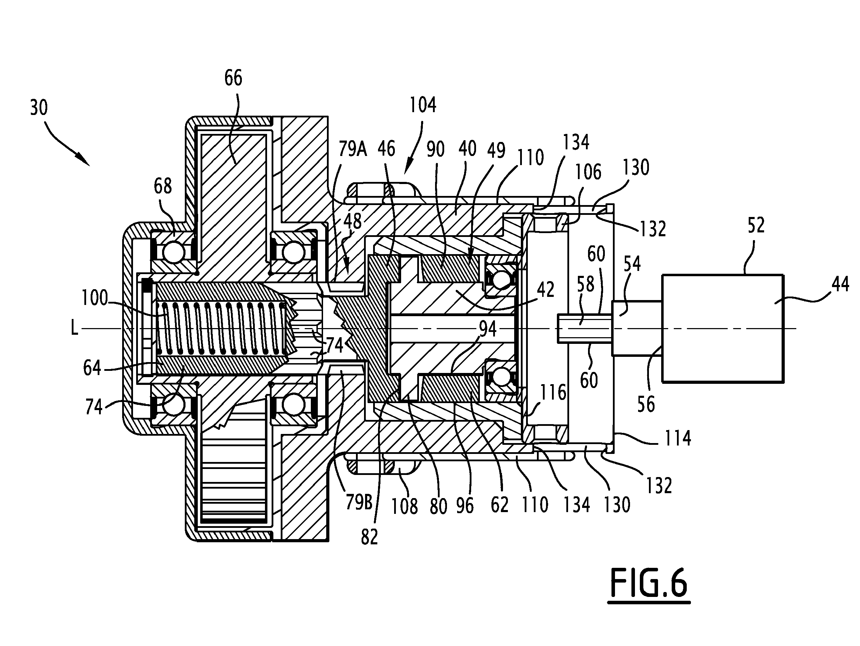

Un procédé de déverrouillage/reverrouillage manuel de l'actionneur 30 va maintenant être décrit, en référence aux Figures 1 à 3 et 6.

Initialement, l'actionneur 30 est en configuration verrouillée : l'arbre intermédiaire 46 est en position verrouillée, et les nervures 74 de l'arbre 46 coopèrent avec les cannelures 79B du frein 48 pour bloquer toute rotation de l'arbre 46 autour de l'axe longitudinal L relativement au capot 40. Le pion 80 repose en appui contre la butée de rétractation 86. La bague 106 est en position de crabotage.

Un opérateur actionne les moyens de désaccouplement 104. A cet effet, il agit sur le manche 120 de la fourche 108 pour faire pivoter cette dernière autour d'un axe d'articulation (non représenté) passant par les points d'articulation 128. Ce faisant, les bielles 110 se déplacent à l'écart du moteur 44, entraînant la bague 106.

Le déplacement de la bague 106 entraîne conjointement celui de l'arbre d'entrée 42 et, l'arbre d'entrée 42 ne pouvant pas se rétracter davantage dans l'arbre intermédiaire 46, de l'arbre intermédiaire 46. L'arbre intermédiaire 46 se désengage donc progressivement du frein 48 et, lorsque la bague 106 arrive en position de décrabotage, l'arbre intermédiaire 46 est intégralement désengagé du frein 48.

L'opérateur peut alors manipuler librement le siège 10.

Pour reverrouiller l'actionneur 30, il suffit à l'opérateur d'agir sur le manche 120 en sens inverse. Ce faisant, la bague 106 revient en position de crabotage, et l'arbre intermédiaire 46, sous l'effet de la force de rappel du ressort 100, revient en position verrouillée.

Grâce à l'invention décrite ci-dessus, le verrouillage et de le déverrouillage de l'actionneur 30 se fait très simplement, sans avoir besoin de recourir à un dispositif de verrouillage ayant un actionneur spécifique.

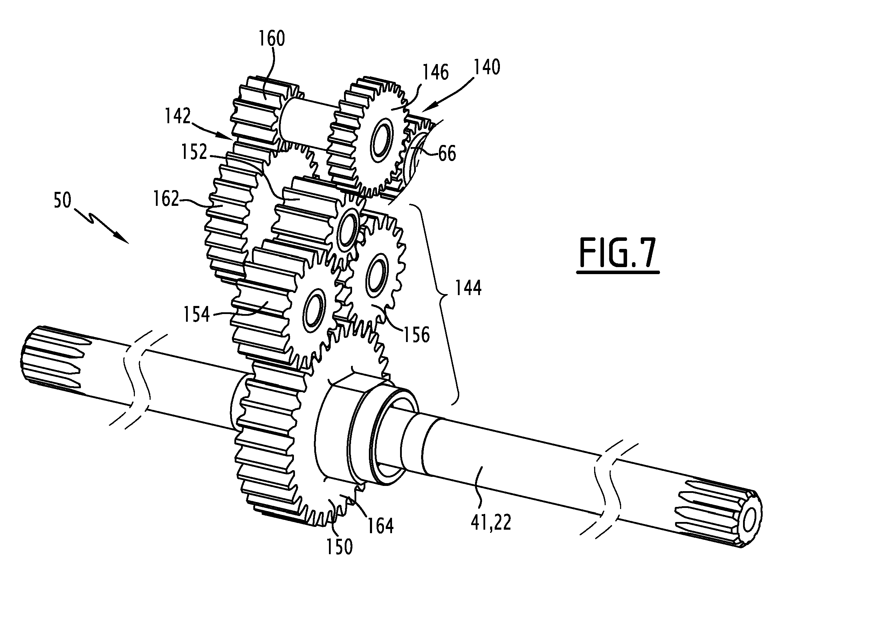

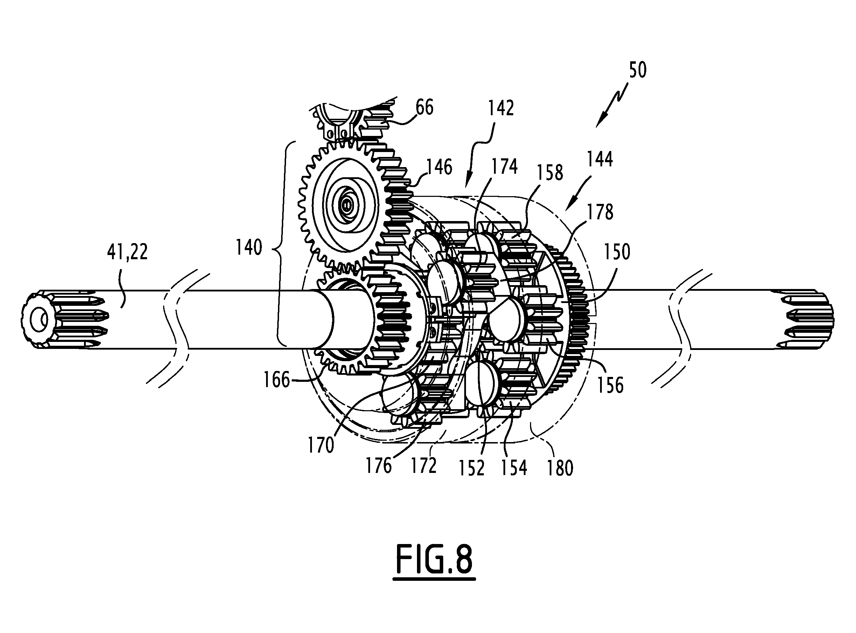

En référence aux Figures 7 et 8, la chaîne de démultiplication 50 comprend une pluralité d'étages de démultiplication 140, 142, 144.

Le premier étage de démultiplication 140 comprend le pignon d'entrée 66, ainsi qu'un pignon de transmission 146, sur lequel est engrené le pignon d'entrée 66. Ce pignon de transmission 146 est monté mobile en rotation autour de son axe sur le bâti 11, est orienté sensiblement parallèlement au pignon d'entrée 66, et a un nombre de dents supérieur à celui du pignon d'entrée 66.

Un étage de démultiplication intermédiaire 142 est interposé entre les premier et dernier étages de démultiplication 140, 144.

Le dernier étage de démultiplication 144 comprend un élément d'engrenage 150 coaxial avec l'arbre de transmission 22 et solidaire en rotation autour de son axe avec l'arbre de transmission 22. Le dernier étage de démultiplication 144 comprend en outre un premier élément denté 152, en particulier un pignon, et une pluralité de satellites 154, 156, 158 engrenés sur ledit premier élément denté 152.

Les spécificités du premier mode de réalisation vont maintenant être décrites, en référence à la Figure 7.

Dans ce mode de réalisation, l'étage de démultiplication intermédiaire 142 comprend un petit pignon 160 et un grand pignon 162. Ces pignons 160, 162 sont engrenés l'un à l'autre et sont orientés sensiblement parallèlement l'un à l'autre.

Le petit pignon 160 est coaxial avec le pignon de transmission 146 et solidaire du pignon de transmission 146. Il a un diamètre inférieur à celui du pignon de transmission 146.

Le grand pignon 162 est coaxial avec le premier élément denté 152 et solidaire du premier élément denté 152. Il a un nombre de dents supérieur à celui du petit pignon 160, et un diamètre supérieur à celui du premier élément denté 152.

Le grand pignon 162 et le premier élément denté 152 sont chacun montés mobiles en rotation autour de leurs axes respectifs sur le bâti 11.

Chaque satellite 154, 156 est orienté sensiblement parallèlement au premier élément denté 152, et est monté mobile en rotation autour de son axe sur le bâti 11.

L'axe de chaque satellite 154, 156 est orienté sensiblement parallèlement à l'axe de l'arbre de transmission 22.

Chaque satellite 154, 156 a un nombre de dents supérieur à celui à celui du premier élément denté 152. Les nombres de dents des satellites 154, 156 sont égaux l'un à l'autre.

Dans l'exemple représenté, les satellites 154, 156 sont au nombre de deux. En variante, les satellites 154, 156 sont au moins trois.

L'élément d'engrenage 150 est constitué par un deuxième élément denté 164, sur lequel est engrené chaque satellite 154, 156. Ce deuxième élément denté 164 a un nombre de dents supérieur à celui de chacun des satellites 154, 156.

Dans l'exemple représenté, le deuxième élément denté 164 est un pignon. En variante, le deuxième élément denté 164 est une couronne.

Les satellites 154, 156 comprennent un unique satellite moteur 154, adapté pour transmettre un couple du premier élément denté 152 au deuxième élément denté 164. L'autre satellite 156 est un satellite fou. Ainsi, les frottements dans le dernier étage de démultiplication 144 sont minimisés.

A cet effet, le satellite fou 156 a un déport de denture négatif relativement au déport de denture du satellite moteur 154. En d'autres termes, à la fabrication du satellite fou 156, il est appliqué un coefficient de déport inférieur à celui utilisé pour la fabrication du satellite moteur 154.

En variante, d'une part l'entraxe entre le satellite fou 156 et le premier élément denté 152 est supérieur à l'entraxe entre le satellite moteur 154 et le premier élément denté 152, et d'autre part l'entraxe entre le satellite fou 156 et le deuxième élément denté 164 est supérieur à l'entraxe entre le satellite moteur 154 et le deuxième élément denté 164. Cette variante simplifie la fabrication de la chaîne de démultiplication 50, en permettant d'utiliser la même pièce pour réaliser les satellites moteur 154 et fou 156.

Les spécificités du deuxième mode de réalisation vont maintenant être décrites, en référence à la Figure 8.

Dans ce mode de réalisation, en plus du pignon d'entrée 66 et du pignon de transmission 146, le premier étage de démultiplication 140 comprend un pignon intermédiaire 166.

Ce pignon intermédiaire 166 est orienté sensiblement parallèlement au pignon de transmission 146, et est monté mobile en rotation autour de son axe sur le bâti 11. Il est engrené sur le pignon de transmission 146. Il a un nombre de dents supérieur à celui du pignon d'entrée 66. Dans l'exemple représenté, son nombre de dents est inférieur à celui du pignon de transmission 146.

Le pignon intermédiaire 166 est en particulier coaxial avec l'arbre de transmission 22.

L'étage de démultiplication intermédiaire 142 et l'étage de démultiplication de sortie 144 sont chacun constitué par un train épicycloïdal.

Ainsi, l'étage intermédiaire 142 comprend un planétaire intérieur 170, une couronne 172, une pluralité de satellites 174, 176 engrenés sur le planétaire intérieur 170 et la couronne 172, et un porte-satellites 178.

Le planétaire intérieur 170 est coaxial avec le pignon intermédiaire 166, et solidaire du pignon intermédiaire 166.

La couronne 172 est coaxiale avec le planétaire intérieur 170, et s'étend autour du planétaire intérieur 170. Elle est montée mobile en rotation autour de son axe sur l'arbre de transmission 22. Elle a un nombre de dents supérieur à celui du planétaire intérieur 170.

Chaque satellite 174, 176 est interposé entre le planétaire intérieur 170 et la couronne 172, et est orienté sensiblement parallèlement au planétaire intérieur 170. Chaque satellite 174, 176 est ainsi disposé à la périphérie du planétaire intérieur 170, et à l'intérieur de la couronne 172. Chaque satellite 174, 176 est monté mobile en rotation autour de son axe sur le porte-satellites 178.

Chaque satellite 174, 176 a un nombre de dents inférieur à celui du planétaire intérieur 170.

Dans l'exemple représenté, les satellites 174, 176 sont au nombre de trois (seuls deux d'entre eux sont visibles sur la Figure 8).

Le porte-satellites 178 est coaxial à l'arbre de transmission 22. Il est monté libre en rotation autour de son axe.

Le premier élément denté 152 est constitué par un planétaire intérieur du dernier étage de démultiplication 144. Il est coaxial avec le porte-satellites 178 de l'étage de démultiplication intermédiaire 142, et est solidaire de ce porte-satellites 178.

La couronne 180 du dernier étage de démultiplication 144 est coaxiale avec la couronne 172 de l'étage de démultiplication intermédiaire 142, et est solidaire de cette couronne 172. Elle a de plus le même diamètre et le même nombre de dents que la couronne 172. Les couronnes 172, 180 forment ainsi une unique couronne commune à l'étage de démultiplication intermédiaire 142 et au dernier étage de démultiplication 144.

Dans l'exemple représenté, les satellites 154, 156, 158 sont au nombre de six (seuls trois d'entre eux sont visibles sur la Figure 8).

Les satellites 154, 156, 158 sont chacun interposés entre le premier élément denté 152 et la couronne 180, et sont chacun orientés sensiblement parallèlement au premier élément denté 152. Chaque satellite 154, 156, 158 est ainsi disposé à la périphérie du premier élément denté 152, et à l'intérieur de la couronne 180. Chaque satellite 154, 156, 158 est monté mobile en rotation autour de son axe sur l'élément d'engrenage 150.

L'élément d'engrenage 150 constitue ainsi un porte-satellites du dernier étage de démultiplication 144.

Ainsi, grâce à l'invention décrite ci-dessus, les risques de rupture de la chaîne de démultiplication 50 sont réduits. En effet, en cas de couple important exercé sur l'arbre de transmission 41 alors que l'actionneur 30 est en configuration verrouillée, ce couple est réparti sur tous les satellites 154, 156, 158 (en particulier, dans le premier mode de réalisation, la prise en charge d'une partie du couple par le satellite fou 156 est permise par une déformation du satellite moteur 154 sous l'effet du couple). Les efforts sont ainsi répartis sur un plus grand nombre de dents, ce qui réduit l'effort supporté par chaque dent, et donc sa probabilité de rupture.

Par ailleurs, à couple de rupture constant, il est possible de réaliser une chaîne de démultiplication allégée, nécessitant moins de matériaux, et des matériaux moins onéreux.

En outre, la chaîne de démultiplication 50 est compacte.

## Revendications

1. Siège de cabine (10) pour aéronef, comprenant un bâti (11) et au moins une roue (20) coopérant avec le plancher de la cabine pour le déplacement du siège (10), la roue (20) étant montée mobile en rotation autour de son axe relativement au bâti (11), et un actionneur (30) pour entraîner la roue (20) en rotation autour de son axe, l'actionneur (30) comprenant :
- un arbre de sortie (22, 41), solidaire en rotation autour de son axe avec la ou chaque roue (20),
- un arbre amont (46),
- un moteur (44), pour entraîner l'arbre amont (46) en rotation autour de son axe relativement au bâti (11),
- un frein (48), pour bloquer la rotation de l'arbre amont (46) autour de son axe relativement au bâti (11), et
- une chaîne de démultiplication (50), liant mécaniquement les arbres amont (46) et de sortie (22, 41) de sorte qu'ils tournent conjointement relativement au bâti (11) autour de leurs axes respectifs,
la chaîne de démultiplication (50) comprenant un dernier étage de démultiplication (144) comportant un élément d'engrenage (150) coaxial avec l'arbre de sortie (22, 41) et solidaire en rotation autour de son axe avec l'arbre de sortie (22, 41),
**caractérisé en ce que** ledit dernier étage de démultiplication (144) comprend en outre un premier élément denté (152), et une pluralité de satellites (154, 156, 158) engrenés sur ledit premier élément denté (152) et coopérant avec l'élément d'engrenage (150).

2. Siège de cabine (10) selon la revendication 1, dans lequel chaque satellite (154, 156) est monté mobile en rotation autour de son axe sur le bâti (11), l'élément d'engrenage (150) solidaire en rotation avec l'arbre de sortie (22, 41) étant constitué par un deuxième élément denté (164) sur lequel est engrené chaque satellite (154, 156).

3. Siège de cabine (10) selon la revendication 2, dans lequel les satellites (154, 156) comprennent un unique satellite moteur (154), adapté pour transmettre un couple du premier élément denté (152) au deuxième élément denté (164), le ou chaque autre satellite (156) étant un satellite fou.

4. Siège de cabine (10) selon la revendication 3, dans lequel le ou chaque satellite fou (156) a un déport de denture négatif relativement au déport de denture du satellite moteur (154).

5. Siège de cabine (10) selon la revendication 3, dans lequel l'entraxe entre le ou chaque satellite fou (156) et le premier élément denté (152) est supérieur à l'entraxe entre le satellite moteur (154) et le premier élément denté (152).

6. Siège de cabine (10) selon la revendication 1, dans lequel le dernier étage de démultiplication (144) est un train épicycloïdal.

7. Siège de cabine (10) selon la revendication 1 ou 6, dans lequel l'élément d'engrenage (150) solidaire en rotation avec l'arbre de sortie (22, 41) est un porte satellite, les satellites (154, 156, 158) étant montés mobiles en rotation autour de leurs axes respectifs sur le porte satellite.

8. Siège de cabine (10) selon la revendication 6 ou 7, dans lequel la chaîne de démultiplication (50) comprend un avant-dernier étage de démultiplication (142), comprenant un élément d'engrenage amont (178) coaxial avec le premier élément denté (152) et solidaire en rotation autour de son axe avec le premier élément denté (152), un élément denté amont (170), et une pluralité de satellites amont (174, 176) engrenés sur ledit élément denté amont (170).

9. Siège de cabine (10) selon la revendication 8, dans lequel l'avant-dernier étage de démultiplication (142) est un train épicycloïdal.

10. Siège de cabine (10) selon la revendication 9, dans lequel la chaîne de démultiplication (50) comprend une couronne (172, 180) commune aux dernier et avant-dernier étages de démultiplication (142, 144).

11. Siège de cabine (10) selon l'une quelconque des revendications 8 à 10, dans lequel l'élément d'engrenage amont (178) est un porte satellite, les satellites amont (174, 176) étant montés mobiles en rotation autour de leurs axes respectifs sur ledit porte satellite.

12. Siège de cabine (10) selon l'une quelconque des revendications précédentes, dans lequel le premier élément denté (152) est un pignon.

## Patentansprüche

1. Kabinensitz (10) für ein Luftfahrzeug, umfassend ein Gestell (11) und mindestens ein Rad (20), das mit dem Boden der Kabine für die Verlagerung des Sitzes (10) zusammenarbeitet, wobei das Rad (20) in Drehung um seine Achse relativ zum Gestell (11) beweglich montiert ist, und einen Aktuator (30) zum Antreiben des Rads (20) in Drehung um seine Achse, wobei der Aktuator (30) umfasst:
- eine Ausgangswelle (22, 41), die in Drehung um ihre Achse mit dem oder jedem Rad (20) fest verbunden ist,
- eine vordere Welle (46),
- einen Motor (44) zum Antreiben der vorderen Welle (46) in Drehung um ihre Achse relativ zum Gestell (11),
- eine Bremse (48), um die Rotation der vorderen Welle (46) um ihre Achse relativ zum Gestell (11) zu blockieren, und
- eine Übersetzungskette (50), welche die vordere Welle (46) und die Ausgangswelle (22, 41) derart mechanisch verbindet, dass sie gemeinsam relativ zum Gestell (11) um ihre jeweiligen Achsen drehen,
wobei die Übersetzungskette (50) eine letzte Übersetzungsstufe (144) umfasst, die ein, mit der Ausgangswelle, koaxiales Eingriffelement (150) (22, 41) aufweist, das in Drehung um seine Achse mit der Ausgangswelle (22, 41) fest verbunden ist,
**dadurch gekennzeichnet, dass** die letzte Übersetzungsstufe (144) ferner ein erstes Zahnelement (152) und eine Vielzahl von Planetenzahnrädern (154, 156, 158) im Eingriff auf dem ersten Zahnelement (152) und in Kooperation mit dem Eingriffelement (150) umfasst.

2. Kabinensitz (10) nach Anspruch 1, wobei jedes Planetenzahnrad (154, 156) in Drehung um seine Achse beweglich auf dem Gestell (11) montiert ist, wobei das mit der Ausgangswelle (22, 41) in Drehung fest verbundene Eingriffelement (150) von einem zweiten Zahnelement (164) gebildet ist, auf dem jedes Planetenzahnrad (154, 156) in Eingriff ist.

3. Kabinensitz (10) nach Anspruch 2, wobei die Planetenzahnräder (154, 156) ein einziges antreibendes Planetenzahnrad (154) umfassen, das ausgebildet ist, um ein Kraftmoment vom ersten Zahnelement (152) an das zweite Zahnelement (164) zu übertragen, wobei das oder jedes andere Planetenzahnrad (156) ein loses Planetenzahnrad ist.

4. Kabinensitz (10) nach Anspruch 3, wobei das oder jedes lose Planetenzahnrad (156) einen negativen Zahnversatz relativ zum Zahnversatz des antreibenden Planetenzahnrads (154) hat.

5. Kabinensitz (10) nach Anspruch 3, wobei der Mittenabstand zwischen dem oder jedem losen Planetenzahnrad (156) und dem ersten Zahnelement (152) größer als der Mittenabstand zwischen dem antreibenden Planetenzahnrad (154) und dem ersten Zahnelement (152) ist.

6. Kabinensitz (10) nach Anspruch 1, wobei die letzte Übersetzungsstufe (144) ein Planetengetriebezug ist.

7. Kabinensitz (10) nach Anspruch 1 oder 6, wobei das in Drehung mit der Ausgangswelle (22, 41) fest verbundene Eingriffelement (150) ein Planetenzahnradträger ist, wobei die Planetenzahnräder (154, 156, 158) in Drehung um ihre jeweiligen Achsen auf dem Planetenzahnradträger beweglich montiert sind.

8. Kabinensitz (10) nach Anspruch 6 oder 7, wobei die Übersetzungskette (50) eine vorletzte Übersetzungsstufe (142) umfasst, die ein vorderes Eingriffelement (178) umfasst, das mit dem ersten Zahnelement (152) koaxial ist und in Drehung um seine Achse mit dem ersten Zahnelement (152), einem vorderen Zahnelement (170) und einer Vielzahl vorderer Planetenzahnräder (174, 176), die auf dem vorderen Zahnelement (170) in Eingriff sind, fest verbunden ist.

9. Kabinensitz (10) nach Anspruch 8, wobei die vorletzte Übersetzungsstufe (142) ein Planetengetriebezug ist.

10. Kabinensitz (10) nach Anspruch 9, wobei die Übersetzungskette (50) einen Kranz (172, 180) umfasst, welcher der letzten und vorletzten Übersetzungsstufe (142, 144) gemeinsam ist.

11. Kabinensitz (10) nach einem der Ansprüche 8 bis 10, wobei das vordere Eingriffelement (178) ein Planetenzahnradträger ist, wobei die vorderen Planetenzahnräder (174, 176) auf dem Planetenzahnradträger um ihre jeweiligen Achsen in Drehung beweglich montiert sind.

12. Kabinensitz (10) nach einem der vorangehenden Ansprüche, wobei das erste Zahnelement (152) ein Ritzel ist.

## Claims

1. An aircraft cabin seat (10), comprising a frame (11) and at least one wheel (20) cooperating with the floor of the cabin to move the seat (10), the wheel (20) being mounted rotating around its axis relative to the frame (11), and an actuator (30) for rotating the wheel (20) around its axis, the actuator (30) comprising:
- an output shaft (22, 41), secured in rotation around its axis with the or each wheel (20),
- an upstream shaft (46),
- a motor (44), for rotating the upstream shaft (46) around its axis relative to the frame (11),
- a brake (48), for locking the rotation of the upstream shaft (46) around its axis relative to the frame (11), and
- a gear reduction chain (50), mechanically connecting the upstream (46) and output (22, 41) shafts such that they rotate jointly relative to the frame (11) around their respective axes,
the gear reduction chain (50) comprising a last reducing stage (144) including a gear element (150) coaxial with the output shaft (22, 41) and secured in rotation around its axis with the output shaft (22, 41),
**characterized in that** said last reducing stage (144) further comprises a first toothed element (152), and a plurality of planet gears (154, 156, 158) meshing on said first toothed element (152) and cooperating with the gear element (150).

2. The cabin seat (10) according to claim 1, wherein each planet gear (154, 156) is mounted rotating around its axis on the frame (11), the gear element (150) secured in rotation with the output shaft (22, 41) being formed by a second toothed element (164) on which each planet gear (154, 156) meshes.

3. The cabin seat (10) according to claim 2, wherein the planet gears (154, 156) comprise a single driving planet gear (154), suitable for transmitting torque from the first toothed element (152) to the second toothed element (164), the or each other planet gear (156) being an idle planet gear.

4. The cabin seat (10) according to claim 3, wherein the or each idle planet gear (156) has a negative addendum modification relative to the addendum modification of the driving planet gear (154).

5. The cabin seat (10) according to claim 3, wherein the center distance between the or each idle planet gear (156) and the first toothed element (156) is greater than the center distance between the driving planet gear (154) and the first toothed element (152).

6. The cabin seat (10) according to claim 1, wherein the last reducing stage (144) is a planetary gear set.

7. The cabin seat (10) according to claim 1 or 6, wherein the gear element (150) secured in rotation with the output shaft (22, 41) is a planet gear carrier, the planet gears (154, 156, 158) being mounted rotating around their respective axes on the planet gear carrier.

8. The cabin seat (10) according claim 6 or 7, in which the gear reduction chain (50) comprises a next-to-last reducing stage (142), comprising an upstream gear element (178) coaxial with the first toothed element (152) and secured in rotation around its axis with the first toothed element (152), an upstream toothed element (170), and a plurality of upstream planet gears (174, 176) meshing on said upstream toothed element (170).

9. The cabin seat (10) according to claim 8, wherein the next-to-last reducing stage (142) is a planetary gear set.

10. The cabin seat (10) according to claim 9, wherein the gear reduction chain (50) comprises a ring (172, 180) shared by the last and next-to-last gear production stages (142, 144).

11. The cabin seat (10) according to any one of claims 8 to 10, wherein the upstream gear element (178) is a planet gear carrier, the upstream planet gears (174, 176) being mounted rotatably around their respective axes on said planet gear carrier.

12. The cabin seat (10) according to any one of the preceding claims, wherein the first toothed element (152) is a pinion.
